# EUROPEAN PATENT SPECIFICATION

(11) **EP 3 862 839 B1**
(45) Date of publication and mention of the grant of the patent: **24.05.2023**
(21) Application number: 21154275.8
(22) Date of filing: 29.01.2021
(51) Int. Cl.: G05D 1/02, B60P 1/00, B60P 3/00, B66F 9/00, B65G 13/04, B65G 21/00

(54) **TRANSPORT SYSTEM AND TRANSPORT METHOD**
TRANSPORTSYSTEM UND TRANSPORTVERFAHREN
SYSTÈME ET PROCÉDÉ DE TRANSPORT

(30) Priority: 10.02.2020 JP 2020020966; 22.12.2020 JP 2020212894
(43) Date of publication of application: 11.08.2021
(73) Proprietor: Ricoh Company, Ltd., Tokyo 143-8555 (JP)
(72) Inventor: HOTTA, Shuhei, Tokyo, 143-8555 (JP); SUZUMOTO, Yuki, Tokyo, 143-8555 (JP)
(74) Representative: J A Kemp LLP

(56) References cited:
- DE-A1-102018 105 911
- US-A1- 2017 225 891
- US-A1- 2018 088 586
- US-A1- 2018 127 212
- US-A1- 2019 287 059
- US-A1- 2019 310 655

## Description

Embodiments of the present disclosure relate to a transport system and a transport method.

### Related Art

Conventionally, in a distribution warehouse or the like, there has been known a method of moving an article stored on a shelf to a delivery place with a conveyor, an automated guided vehicle that travels along a predetermined track, or the like.

For example, there is known an automated guided vehicle that receives a collecting instruction, collects wafers, and delivers a carrier box including the collected wafers to a station.

In the above-described conventional technology, the layout is greatly limited and it is difficult to change the layout in order to secure a predetermined track of the conveyor or the automated guided vehicle.

US 2017/225891 A1 discloses a robotic navigation and mapping system and method. US 2018/088586 A1 discloses identification information for warehouse navigation. US 2018/127212 A1 discloses a hybrid modular storage fetching system. US 2019/287059 A1 discloses systems and methods for deployment of highly autonomous transport system. US 2019/0310655 A1 discloses order fulfillment and inventory management for robots.

### SUMMARY

An object of the present disclosure is to provide a transport system that facilitates the change in layout.

According to an aspect of the present disclosure, there is provided a transport system according to claim 1.

According to another aspect of the present disclosure, there is provided a method according to claim 3.

According to aspects of the present disclosure, the layout of a transport system can be easily changed.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is an illustration of an overall configuration of a transport system according to an embodiment of the present disclosure;
FIG. 2 is an illustration of an appearance of an automated guided vehicle according to an embodiment of the present disclosure;
FIG. 3 is an illustration of a hardware configuration of the automated guided vehicle according to an embodiment of the present disclosure;
FIG. 4 is an illustration of an appearance of a bucket station according to an embodiment of the present disclosure;
FIG. 5 is an illustration of an example of a placed state of a bucket on the bucket station of FIG. 4;
FIG. 6 is a diagram of a hardware configuration of the bucket station according to an embodiment of the present disclosure;
FIG. 7 is a diagram of a hardware configuration of an operation management server according to an embodiment of the present disclosure;
FIG. 8 is a diagram of functional units of the automated guided vehicle according to an embodiment of the present disclosure;
FIG. 9 is a diagram of functional units of the operation management server according to an embodiment of the present disclosure;
FIG. 10 is a diagram of functional units of a travel control server according to an embodiment of the present disclosure;
FIG. 11 is a table of an example of way point information;
FIG. 12 is a table of an example of traveling direction information;
FIG. 13 is a diagram illustrating traveling directions;
FIG. 14 is a diagram of an example of map information;
FIG. 15 is a table of an example of automated guided vehicle information;
FIG. 16 is a table of an example of exclusive lock information;
FIG. 17 is a diagram of a sequence of a bucket transport process according to an embodiment of the present disclosure;
FIG. 18 is a diagram of a sequence of self-position estimation processing according to an embodiment of the present disclosure;
FIG. 19 is a diagram of a sequence of self-position update processing according to an embodiment of the present disclosure;
FIG. 20 is a flowchart of the self-position update processing according to an embodiment of the present disclosure;
FIG. 21 is a diagram illustrating a method of updating self-positions in a lateral direction relative to a traveling direction and a rotational direction; and
FIG. 22 is a diagram illustrating a method of updating a self-position in the traveling direction.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.

Hereinafter, a transport system according to embodiments of the present disclosure is described with reference to the drawings.

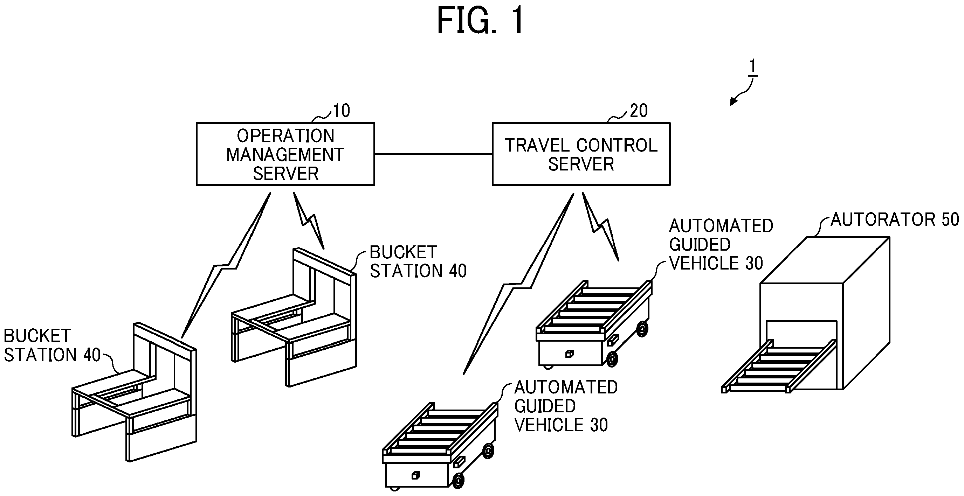

FIG. 1 is an illustration of an overall configuration of a transport system according to an embodiment of the present disclosure.

A transport system 1 according to an embodiment of the present disclosure includes an operation management server 10, a travel control server 20, an automated guided vehicle (AGV) 30, a bucket station 40, and an autorator 50.

The operation management server 10 is communicably connected to the bucket station 40. In order to increase the degree of freedom of the layout of the bucket station 40, wireless communication is desirable. However, wired communication may be used. The operation management server 10 is communicably connected to the travel control server 20.

The operation management server 10 manages the operation of the automated guided vehicle 30. For example, when the operation management server 10 receives, from the bucket station 40, a signal indicating that a bucket (or a cargo basket) is placed, the operation management server 10 selects the automated guided vehicle 30 that transports the bucket. The operation management server 10 transmits a signal indicating a movement request to the travel control server 20. The signal indicating the movement request includes an identifier identifying the selected automated guided vehicle 30 and an identifier identifying the bucket station 40 on which the bucket is placed.

The travel control server 20 controls travel of the automated guided vehicle 30. For example, the travel control server 20 is communicably connected to the automated guided vehicle 30 by wireless communication. When the travel control server 20 receives the signal indicating the movement request from the operation management server 10, the travel control server 20 determines a movement route based on the current position of the selected automated guided vehicle 30 and the position of a movement destination. The travel control server 20 transmits information indicating the movement route to the automated guided vehicle 30.

The automated guided vehicle 30 is a traveling body that transports a bucket. When the automated guided vehicle 30 receives the information indicating the movement route from the travel control server 20, the automated guided vehicle 30 travels along the movement route. The automated guided vehicle 30 transports the bucket placed on the bucket station 40 to the autorator 50. In the present embodiment, a plurality of automated guided vehicles 30 may be present in the transport system 1.

The bucket station 40 is a load table on which a bucket is placed. The bucket station 40 detects the placed bucket with a sensor and transmits a signal indicating that the bucket has been detected to the operation management server 10. In the present embodiment, a plurality of bucket stations 40 may be present in the transport system 1.

The autorator 50 is a carrier of a bucket. In the present embodiment, the autorator 50 is a transport destination to which the automated guided vehicle 30 transports a bucket. Hereinafter, an example in which the number of the autorator 50 is one is described.

Next, an example of the appearance and hardware configuration of each device is described.

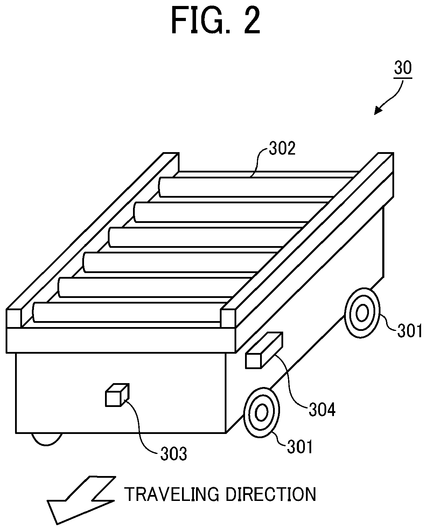

FIG. 2 is an illustration of an appearance of the automated guided vehicle according to an embodiment of the present disclosure.

The automated guided vehicle 30 includes wheels 301, a conveyor 302, a laser range finder (LRF) 303, and a photoelectric sensor 304.

The automated guided vehicle 30 drives the wheels 301 to travel. When the automated guided vehicle 30 arrives at the bucket station 40, the automated guided vehicle 30 drives the conveyor 302 to place the bucket on the bucket station 40. The automated guided vehicle 30 detects a marker attached to the bucket station 40 with the LRF 303 and the photoelectric sensor 304 as an environment detector. Although a specific method of detecting the marker is described later, the automated guided vehicle 30 can grasp an accurate position of the bucket station 40 with the detected marker.

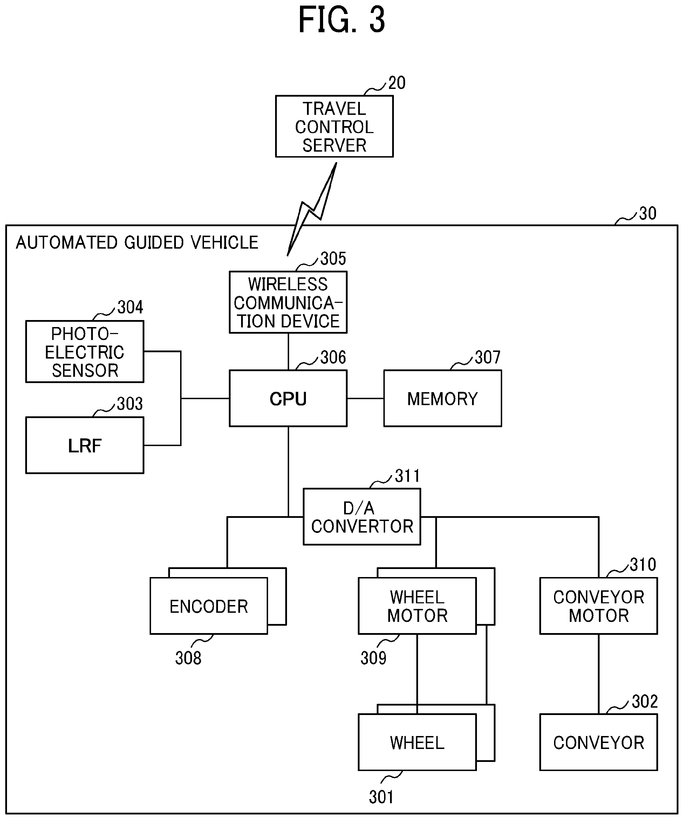

FIG. 3 is an illustration of a hardware configuration of the automated guided vehicle according to an embodiment of the present disclosure.

In addition to the components described above, the automated guided vehicle 30 includes a wireless communication device 305, a central processing unit (CPU) 306, a memory 307, an encoder 308, a wheel motor 309, a conveyor motor 310, and a digital-to-analog (D/A) convertor 311.

The wireless communication device 305 is a device that communicates with the travel control server 20 by wireless communication.

The CPU 306 is an arithmetic processing device that executes various types of processing described later.

The memory 307 is a volatile or non-volatile storage medium, stores various types of information, and functions as a work area of the CPU 306.

The encoder 308 is a sensor (or a rotary encoder) that detects a rotation angle of the wheel 301. The encoder 308 transmits information indicating the detected rotation angle of the wheel 301 to the CPU 306.

The wheel motor 309 is a driving device that rotates the wheel 301. The wheel motor 309 is driven under the control of the CPU 306 via the D/A convertor 311.

The conveyor motor 310 is a driving device that rotates the conveyor 302. The conveyor motor 310 is driven under the control of the CPU 306 via the D/A convertor 311.

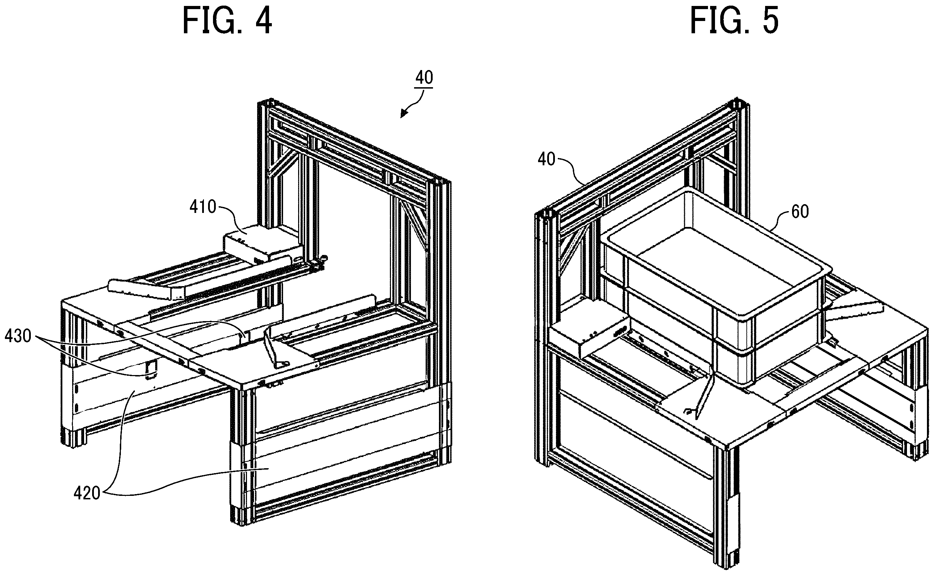

FIG. 4 is an illustration of an appearance of the bucket station according to an embodiment of the present disclosure.

The bucket station 40 is a table on which a bucket is placed. There is a space for the automated guided vehicle 30 to travel under the placed bucket.

For example, the bucket station 40 includes an electrical equipment 410, a reflection tape 420, and a reflection plate 430.

The electrical equipment 410 includes an electronic device described later. For example, the electrical equipment 410 includes a photoelectric sensor 414.

The photoelectric sensor 414 is a reflection type photoelectric sensor that detects the placed bucket.

The reflection tape 420 and the reflection plate 430 are attached to positions abutting on a space where the automated guided vehicle 30 travels. Each of the reflective tape 420 and the reflective plate 430 is an example of the marker (index).

The reflective tape 420 is linearly attached along the traveling direction of the automated guided vehicle 30. In other words, the length of reflective tape 420 along the traveling direction of the automated guided vehicle 30 is set to a length sufficient to detect the orientation of the bucket station 40.

A plurality of reflecting plates 430 are attached along the traveling direction of the automated guided vehicle 30. The length of each reflecting plate 430 along the traveling direction of the automated guided vehicle 30 is short in order to clarify the position in the traveling direction. The reflection plate 430 is formed of a material having a reflectance different from a reflectance of the reflection tape 420 so as to be distinguished from the reflection tape 420.

FIG. 5 is an illustration of an example of a placed state of a bucket on the bucket station.

A bucket 60 enters the detection range of the photoelectric sensor 414 in the placed state in which the bucket 60 is placed on the bucket station 40.

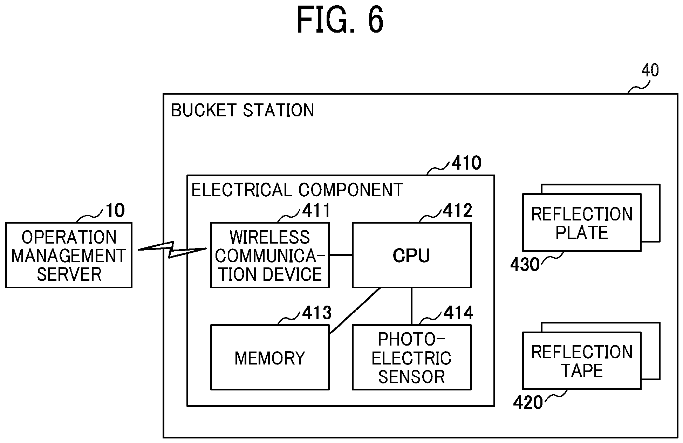

FIG. 6 is a diagram of a hardware configuration of the bucket station according to an embodiment of the present disclosure.

The electrical equipment 410 of the bucket station 40 includes a wireless communication device 411, a CPU 412, and a memory 413 in addition to the components described above.

The wireless communication device 411 is a device that communicates with the operation management server 10 by wireless communication.

The CPU 412 is an arithmetic processing device that executes various types of processing. For example, when the photoelectric sensor 414 detects a bucket 60, the CPU 412 controls the wireless communication device 411 to transmit a signal indicating that the bucket 60 has been detected to the operation management server 10.

The memory 413 is a volatile or non-volatile storage medium, stores various types of information, and functions as a work area of the CPU 412. For example, the memory 413 stores information indicating the position of the bucket station 40 on a map (for example, a waypoint identification (ID) described later).

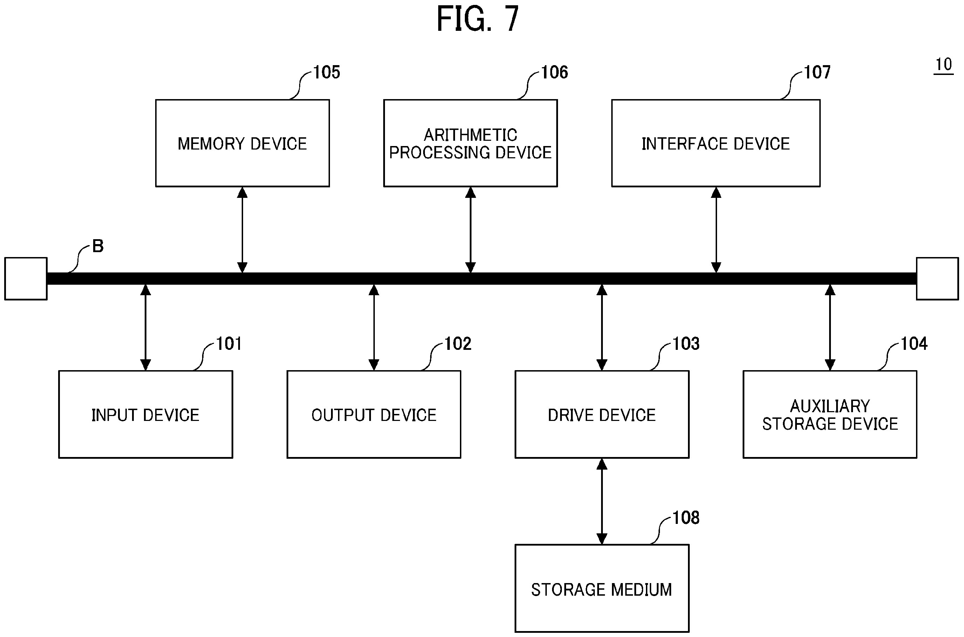

FIG. 7 is a diagram of a hardware configuration of the operation management server according to an embodiment of the present disclosure.

The operation management server 10 includes an input device 101, an output device 102, a drive device 103, an auxiliary storage device 104, a memory device 105, an arithmetic processing device 106, and an interface device 107, which are connected to each other via a bus B.

The input device 101 is a device for inputting various types of information, and is implemented by, for example, a keyboard or a pointing device. The output device 102 outputs various types of information, and is implemented by, for example, a display. The interface device 107 includes, for example, a local area network (LAN) card and is used to connect to the network.

An information processing program according to the present embodiment is at least a part of various programs for controlling the operation management server 10. The information processing program is provided by, for example, distribution of a storage medium 108 or may be downloaded from a network. The storage medium 108 in which the information processing program is stored may be implemented by various types of storage medium including a storage medium such as a compact disc read-only memory (CD-ROM), a flexible disk, or a magneto-optical disk that optically, electrically or magnetically records the data, and a semiconductor memory such as a read only memory (ROM) or a flash memory that electrically records the data.

When the storage medium 108 in which the information processing program is stored is set in the drive device 103, the information processing program is installed from the storage medium 108 to the auxiliary storage device 104 via the drive device 103. The information processing program downloaded from the network is installed into the auxiliary storage device 104 via the interface device 107.

The auxiliary storage device 104 stores the installed information processing program, and also stores, for example, necessary files and data of databases and the like as described above. The memory device 105 reads the information processing program from the auxiliary storage device 104 and stores the information processing program when the operation management server 10 is started. The arithmetic processing device 106 performs various types of processing described later in accordance with the information processing program stored in the memory device 105.

The hardware configuration of the travel control server 20 is also similar to the hardware configuration of the operation management server 10.

Next, the functional configuration of each device is described.

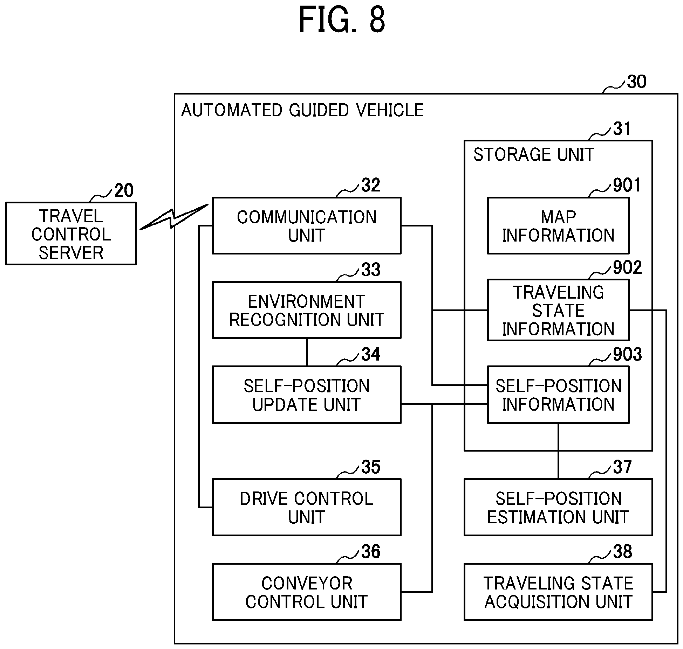

FIG. 8 is a diagram of functional units of the automated guided vehicle according to an embodiment of the present disclosure.

The automated guided vehicle 30 includes a storage unit 31, a communication unit 32, an environment recognition unit 33, a self-position update unit 34, a drive control unit 35, a conveyor control unit 36, a self-position estimation unit 37, and a traveling state acquisition unit 38.

The storage unit 31 stores various types of information. For example, the storage unit 31 stores map information 901, traveling state information 902, and self-position information 903. The memory 307 described above functions as the storage unit 31.

The map information 901 is information indicating a map of an area in which the automated guided vehicle 30 travels. Details of the map information 901 are described later.

The traveling state information 902 is information indicating the traveling state of the automated guided vehicle 30. For example, the traveling state information 902 includes information indicating whether the automated guided vehicle 30 is moving or stopped, and information indicating the reason for stopping when the automated guided vehicle 30 is stopped.

The self-position information 903 is information indicating the position of the automated guided vehicle 30. For example, the self-position information 903 includes xy coordinate values set in a map of the map information 901 and an angle based on the x-axis positive direction.

The communication unit 32 communicates with the travel control server 20. For example, the communication unit 32 receives route information from the travel control server 20. The communication unit 32 transmits the traveling state information 902 and the self-position information 903 to the travel control server 20 periodically, for example, every 10 seconds. The wireless communication device 305 described above functions as the communication unit 32.

The environment recognition unit 33 recognizes the surrounding environment. For example, the environment recognition unit 33 detects the marker attached to the bucket station 40 with the LRF 303 and the photoelectric sensor 304.

The self-position update unit 34 updates the self-position information 903 based on the data acquired by the environment recognition unit 33. For example, the self-position update unit 34 calculates values indicating the distance and relative angle between the automated guided vehicle 30 and the bucket station 40 based on the measurement data measured by the LRF 303 and the photoelectric sensor 304.

The self-position update unit 34 calculates values indicating the coordinates and the direction of the automated guided vehicle 30 based on the calculated values indicating the distance and the relative angle and the position and angle of the bucket station 40 included in the map information 901.

In this way, the self-position update unit 34 updates the self-position information 903 with the calculated values.

The drive control unit 35 executes control to drive the automated guided vehicle 30 based on the route information received by the communication unit 32. For example, the drive control unit 35 is implemented by the CPU 306 and drives the wheel motor 309 via the D/A convertor 311.

After the self-position update unit 34 updates the self-position, the conveyor control unit 36 executes control to drive the conveyor 302 in order to receive the bucket 60 from the bucket station 40. For example, the conveyor control unit 36 is implemented by the CPU 306 and drives the conveyor motor 310 via the D/A convertor 311.

The self-position estimation unit 37 estimates the self-position. For example, the self-position estimation unit 37 calculates a value indicating a difference between the coordinates and the direction of the automated guided vehicle 30 based on the number of rotations and the direction of the wheels 301 acquired from the encoder 308. The self-position estimation unit 37 adds the calculated value indicating the difference to the value indicated by the self-position information 903 to update the self-position information 903 to a value indicating the latest self-position. The self-position estimation unit 37 estimates the self-position periodically, for example, every 10 seconds.

The method of estimating the self-position may be another method. For example, the environment recognition unit 33 may include a camera as an environment detector, and the self-position estimation unit 37 may analyze an image captured by the camera to estimate the self-position. Alternatively, the environment recognition unit 33 may include an ultrasonic sensor, and the self-position estimation unit 37 may recognize surrounding walls, pillars, and the like obtained by the ultrasonic wave sensor and compare the surrounding walls, pillars, and the like with the map information 901 to estimate the self-position. In such a case, the map information 901 includes information indicating positions of walls, pillars, and the like.

The traveling state acquisition unit 38 acquires information indicating the traveling state. For example, the traveling state acquisition unit 38 determines whether the automated guided vehicle 30 is moving or stopped based on the rotation speed of the wheels 301 from the encoder 308. For example, the traveling state acquisition unit 38 may determine that the vehicle is stopped when the rotation speed is equal to or less than a predetermined threshold value Th1. The traveling state acquisition unit 38 reflects the determination result in the traveling state information 902.

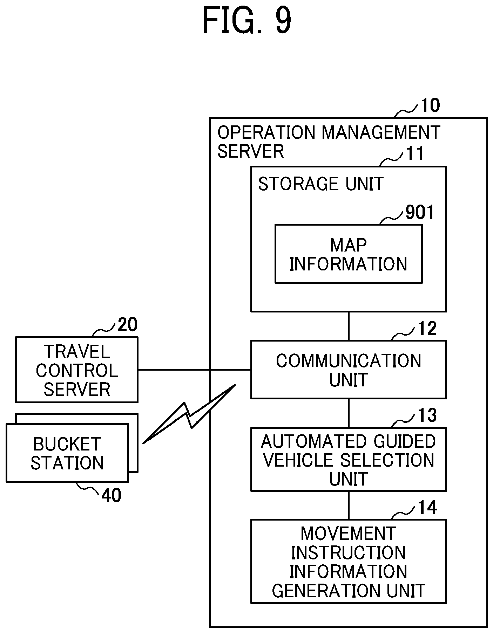

FIG. 9 is a diagram of functional units of the operation management server according to an embodiment of the present disclosure.

The operation management server 10 includes a storage unit 11, a communication unit 12, an automated guided vehicle selection unit 13, and a movement instruction information generation unit 14.

The storage unit 11 stores various types of information. For example, the storage unit 11 stores map information 901. The map information 901 is described later.

The communication unit 12 communicates with the travel control server 20 or the bucket station 40.

The automated guided vehicle selection unit 13 selects the automated guided vehicle 30 to be moved. For example, the automated guided vehicle selection unit 13 acquires automated guided vehicle information from the travel control server 20 and selects the automated guided vehicle 30 based on the acquired automated guided vehicle information. For example, the automated guided vehicle selection unit 13 selects one automated guided vehicle 30 for transporting a bucket 60 placed on the bucket station 40 from among automated guided vehicles 30 that are not moving. When there are a plurality of automated guided vehicles 30 that are not moving, the automated guided vehicle selection unit 13 selects one automated guided vehicle 30 having the shortest travel distance to the bucket station 40 on the route based on the map information 901.

The movement instruction information generation unit 14 generates information (movement instruction information) indicating an instruction of movement to the selected automated guided vehicle 30. For example, the movement instruction information includes an automated guided vehicle ID for identifying the automated guided vehicle 30 and information indicating the position of the movement destination (for example, a waypoint ID described later). The generated movement instruction information is transmitted to the travel control server 20 by the communication unit 12.

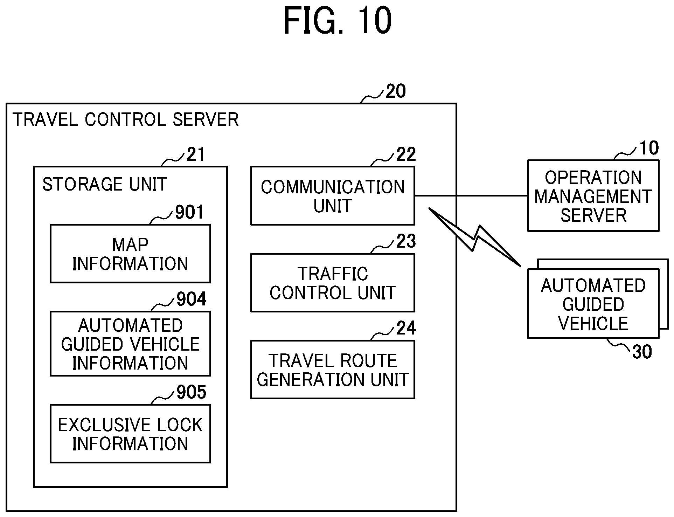

FIG. 10 is a diagram of functional units of the travel control server according to an embodiment of the present disclosure.

The travel control server 20 includes a storage unit 21, a communication unit 22, a traffic control unit 23, and a travel route generation unit 24.

The storage unit 21 stores various types of information. For example, the storage unit 21 stores map information 901, automated guided vehicle information 904, and exclusive lock information 905.

The automated guided vehicle information 904 is information indicating a traveling state or the like of the automated guided vehicle 30. The automated guided vehicle information 904 is periodically updated based on the self-position information and the traveling state information received from the automated guided vehicle 30.

The exclusive lock information 905 is information about an exclusive section on the map. The exclusive section is a section through which only one automated guided vehicle 30 can pass. The exclusive section is set in the map information 901, for example, for a place where the road width is narrow and the plurality of automated guided vehicles 30 cannot pass each other.

The communication unit 22 communicates with the operation management server 10 or the automated guided vehicle 30.

The traffic control unit 23 controls the traffic of each automated guided vehicle 30 so that a plurality of automated guided vehicles 30 do not pass through the exclusive section.

When the travel route generation unit 24 receives a movement request signal from the operation management server 10, the travel route generation unit 24 determines the shortest route along which the automated guided vehicle 30 can move from the self position to the destination based on the map information 901, and generates route information indicating the determined route.

Next, various types of information are described with reference to drawings.

The map information 901 includes waypoint information and traveling direction information.

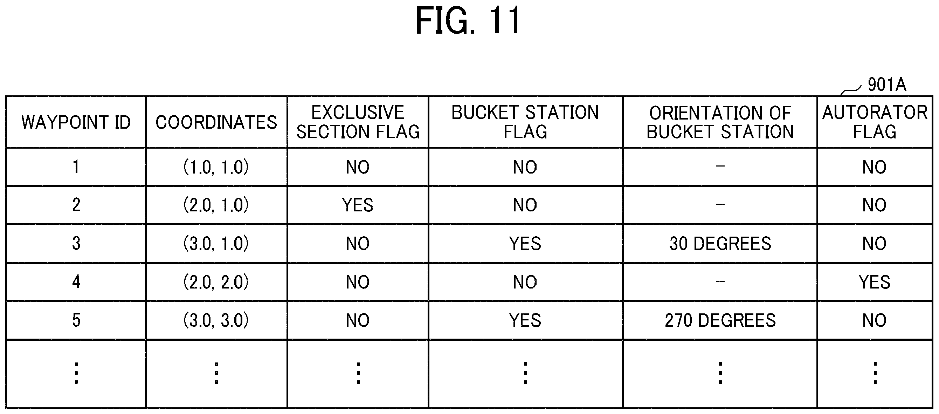

FIG. 11 is a table of an example of the way point information.

Waypoint information 901A illustrated in FIG. 11 includes, as items, "waypoint ID", "coordinates", "exclusive section flag", "bucket station flag", "orientation of bucket station", and "autorator flag".

The value of the item "waypoint ID" is an identifier for identifying a waypoint. The waypoint is a concept indicating a point on a map.

The values of the item "coordinates" are the x-y coordinate values of each waypoint on the map, and the x-y coordinate values are represented by the length of the actual transport path, for example, in units of cm.

The value of the item "exclusive section flag" is a value indicating whether each waypoint is in an exclusive section.

The value of the item "bucket station flag" is a value indicating whether each waypoint is a point at which the bucket station 40 is installed.

The value of the item "orientation of bucket station" is a value indicating the orientation of the bucket station 40 when each waypoint is a point at which the bucket station 40 is installed. For example, the orientation of the bucket station is an angle of the front direction of the bucket station 40 with reference to the x-axis positive direction on the map when viewed from above.

Note that the front direction is defined for the bucket station 40, and for example, the traveling direction of the automated guided vehicle 30 in passing through the bucket station 40 is defined as the front direction.

The value of the item "autorator flag" is a value indicating whether each way point is a point at which the autorator 50 is installed. In the present embodiment, the point at which the autorator 50 is installed is a transport destination of the bucket 60.

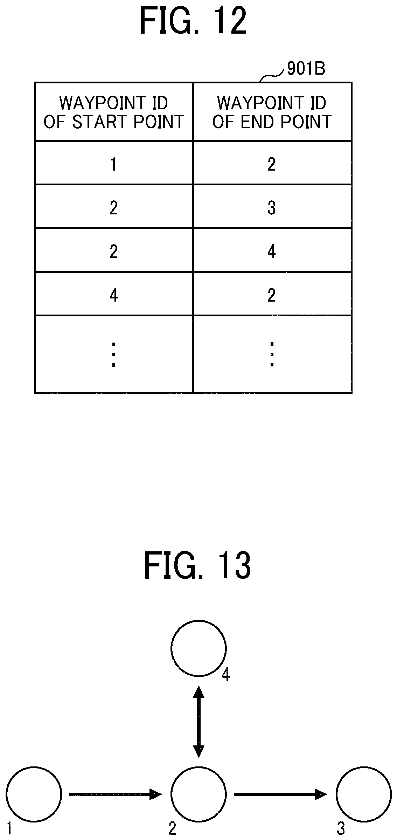

FIG. 12 is a table of an example of the traveling direction information.

The traveling direction information 901B is information indicating a route along which the automated guided vehicle 30 can travel. For example, the traveling direction information 901B includes "waypoint ID of start point" and "waypoint ID of end point" as items.

The value of the item "waypoint ID of start point" is a waypoint ID indicating a start point of a route along which the automated guided vehicle 30 can travel.

The value of the item "waypoint ID of end point" is a waypoint ID indicating an end point of a route along which the automated guided vehicle 30 can travel.

FIG. 13 is a diagram illustrating the traveling directions.

For example, between the waypoint ID "1" and the waypoint ID "2", the automated guided vehicle 30 can travel from the waypoint ID "1" to the waypoint ID "2" according to the first record of the table illustrated in FIG. 12.

On the other hand, when there is no record in which the value of the item "waypoint ID of start point" is "2" and the value of the item "waypoint ID of end point" is "1" in the traveling direction information 901B, the automated guided vehicle 30 cannot travel from the waypoint ID "2" to the waypoint ID "1".

Further, for example, between the waypoint ID "2" and the waypoint ID "4", the automated guided vehicle 30 can travel in both directions by the third record and the fourth record of the table illustrated in FIG. 12.

Thus, the traveling direction information 901B defines how the automated guided vehicle 30 can travel between the waypoints.

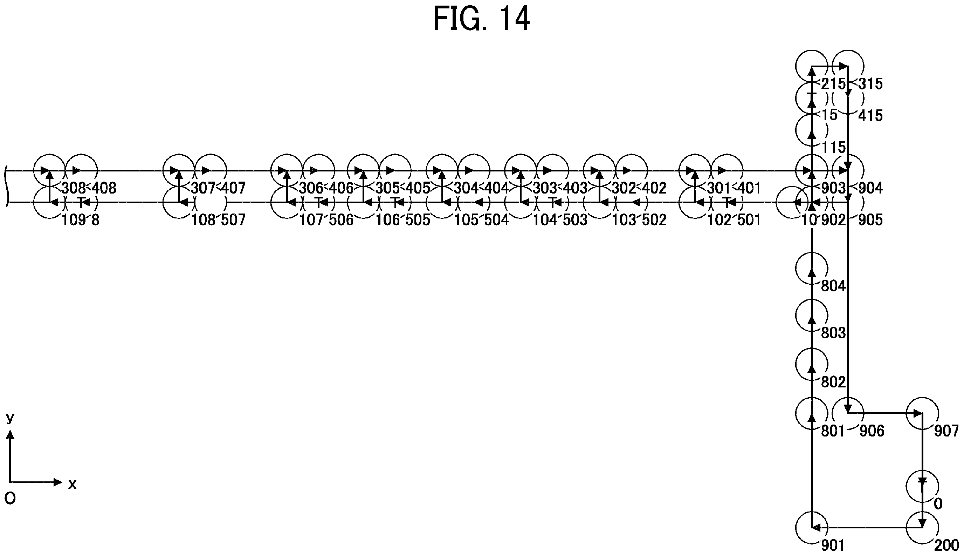

FIG. 14 is a diagram of an example of the map information.

The map information 901 is information in which the waypoint information 901A and the traveling direction information 901B are integrated together. For example, the coordinates of each waypoint and the route along which the automated guided vehicle 30 can travel are defined by the waypoint information 901A and the traveling direction information 901B. Accordingly, if a map is drawn based on such information, the map is obtained in which respective waypoints are plotted in the xy space as illustrated in FIG. 14.

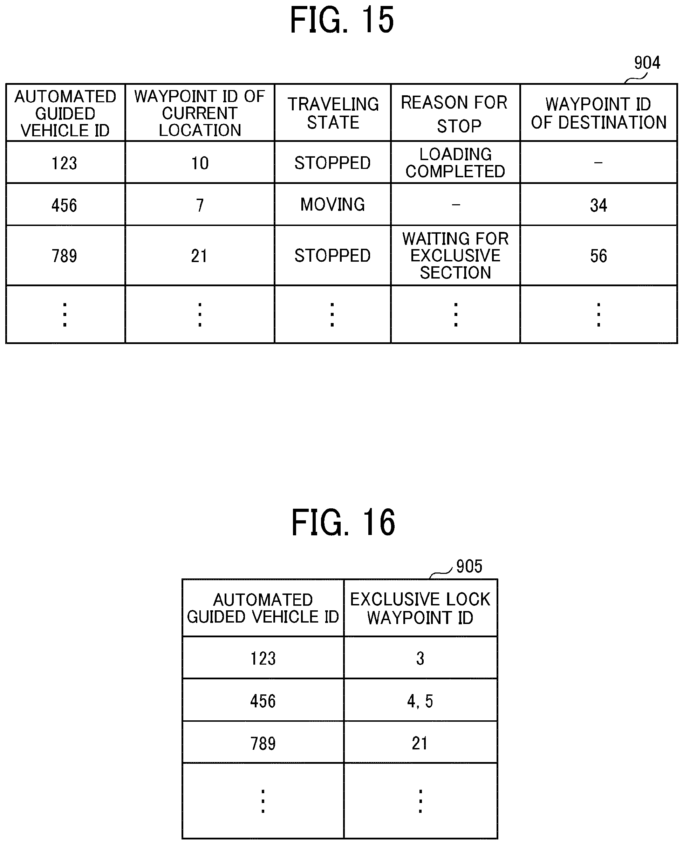

FIG. 15 is a table of an example of the automated guided vehicle information.

The automated guided vehicle information 904 includes, as items, "automated guided vehicle ID", "waypoint ID of current location", "traveling state", "reason for stop", and "waypoint ID of destination".

The value of the item "automated guided vehicle ID" is an identifier for identifying the automated guided vehicle 30.

The value of the item "waypoint ID of current location" is a waypoint ID corresponding to the current (latest) location of the automated guided vehicle 30.

The value of the item "traveling state" is a text indicating the current (latest) traveling state of the automated guided vehicle 30. For example, the value of the item "running state" is either "stopped" or "moving".

The value of the item "reason for stop" is a text indicating the reason for stop when the value of the item "running state" is "stopped". The value of the item "reason for stop" includes "waiting for exclusive section", "loading completed", and the like.

When the value of the item "reason for stop" is "waiting for exclusive section", the value indicates that, when an exclusive section is used (locked) by another automated guided vehicle 30, one automated guided vehicle 30 is instructed by the traffic control unit 23 to wait for the exclusive section to be unlocked.

When the value of the item "reason for stop" is "loading completed", the value indicates that the automated guided vehicle 30 has collected the bucket 60 in the bucket station 40 and is waiting for the next instruction.

The value of the item "waypoint ID of destination" is a waypoint ID of the destination to which the automated guided vehicle 30 is heading in response to the movement instruction.

FIG. 16 is a table of an example of the exclusive lock information.

The exclusive lock information 905 is information indicating the automated guided vehicle 30 that uses (locks) an exclusive section. For example, the exclusive lock information 905 includes "automated guided vehicle ID" and "exclusive lock waypoint ID" as items.

The value of the item "automated guided vehicle ID" is an identifier for identifying the automated guided vehicle 30.

The value of the item "exclusive lock waypoint ID" is a waypoint ID of the locked exclusive section. Although described in detail later, a plurality of waypoint IDs may be locked.

Next, an operation of the transport system 1 according to an embodiment of the present disclosure is described.

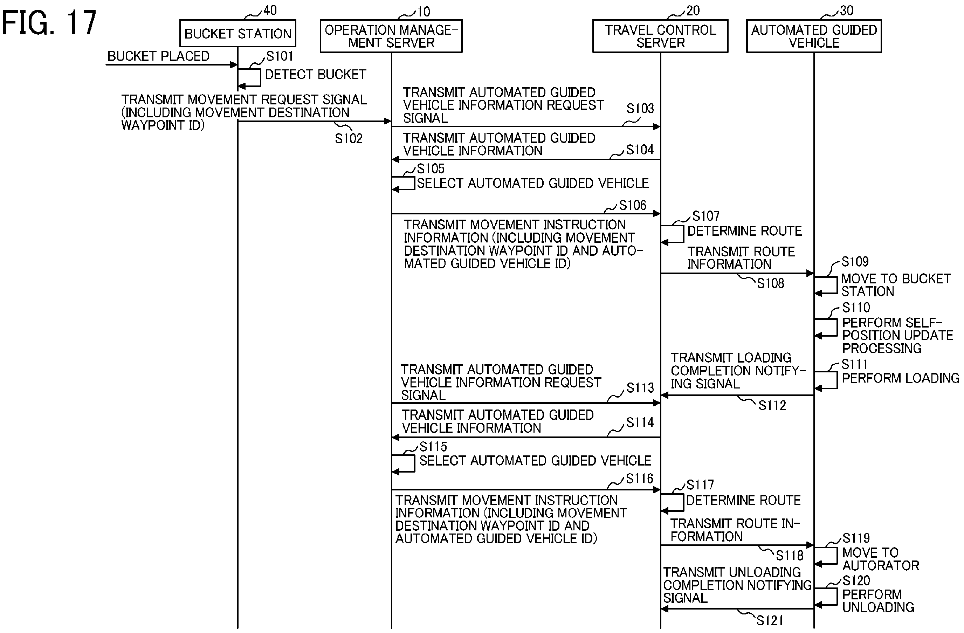

FIG. 17 is a diagram of a sequence of a bucket transport process according to an embodiment of the present disclosure.

When a bucket 60 is placed on the bucket station 40, the photoelectric sensor 414 of the bucket station 40 detects the bucket 60 (step S101).

The wireless communication device 411 of the bucket station 40 transmits a movement request signal to the operation management server 10 (step S102). The movement request signal includes a movement destination waypoint ID. The movement destination waypoint ID is a waypoint ID of the bucket station 40 (itself) stored in the memory 413 of the bucket station 40.

When the communication unit 12 of the operation management server 10 receives the movement request signal, the communication unit 12 transmits a signal (automated guided vehicle information request signal) requesting transmission of automated guided vehicle information to the travel control server 20 (step S103).

When the communication unit 22 of the travel control server 20 receives the automated guided vehicle information request signal, the communication unit 22 transmits the automated guided vehicle information 904 stored in the storage unit 21 to the operation management server 10 (step S104). In the automated guided vehicle information 904, the latest position and traveling state of the automated guided vehicle 30 are reflected by self-position estimation processing and self-position update processing described later.

Next, the automated guided vehicle selection unit 13 of the operation management server 10 selects the automated guided vehicle 30 that transports the bucket 60 (step S105). For example, the automated guided vehicle selection unit 13 refers to the automated guided vehicle information 904 received in step S104, and selects one automated guided vehicle 30 for transporting the bucket 60 from among automated guided vehicles 30 that are not moving.

Further, when a plurality of automated guided vehicles 30 are available, the automated guided vehicle selection unit 13 selects one automated guided vehicle 30 having the shortest movement distance on the route to the bucket station 40 based on the map information 901.

Next, the movement instruction information generation unit 14 generates movement instruction information. The movement instruction information includes a waypoint ID of a movement destination and an automated guided vehicle ID.

The communication unit 12 transmits the movement instruction information to the travel control server 20 (step S106). When the communication unit 22 of the travel control server 20 receives the movement instruction information, the travel route generation unit 24 determines a route (step S107).

For example, the travel route generation unit 24 determines the shortest route along which the automated guided vehicle 30 can travel from the self position to the destination, based on the map information 901. The travel route generation unit 24 generates route information indicating the determined route.

The route information is information indicating a waypoint ID from the current location to the destination. For example, when the way point ID of the current location is "3" and the way point ID of the destination is "10", the route information is a data string, such as (3, 4, 8, 12, 10), sequentially indicating the way point IDs that the automated guided vehicle 30 pass between the current location and the destination.

The communication unit 22 transmits the route information to the automated guided vehicle 30 (step S108). When the communication unit 32 of the automated guided vehicle 30 receives the route information, the drive control unit 35 executes control to drive the wheel motor 309. The automated guided vehicle 30 moves to the bucket station 40 set as the destination (step S109).

When the automated guided vehicle 30 arrives at the bucket station 40, the automated guided vehicle 30 executes self-position update processing (step S110). The self-position update processing is processing of reading a marker attached to the bucket station 40 and updating the self-position information 903 stored in the storage unit 31. Details of the self-position update processing are described later.

Subsequently, the automated guided vehicle 30 performs loading (step S111). For example, the conveyor control unit 36 executes control to drive the conveyor motor 310. Accordingly, the bucket 60 placed on the bucket station 40 is collected by the automated guided vehicle 30.

The communication unit 32 transmits a signal notifying completion of loading to the travel control server 20 (step S112). The automated guided vehicle 30 updates the traveling state information 902 in the storage unit 11 to information indicating "traveling state: stopped" and "reason for stop: loading completed".

The communication unit 12 of the operation management server 10 periodically transmits an automated guided vehicle information request signal to the travel control server 20 (step S113). When the communication unit 22 of the travel control server 20 receives the automated guided vehicle information request signal, the communication unit 22 transmits the automated guided vehicle information 904 stored in the storage unit 21 to the operation management server 10 (step S114).

The automated guided vehicle information 904 stored in the storage unit 21 of the travel control server 20 periodically reflects the latest travel state by the self-position estimation processing described later, and thus reflects "travel state: stopped" and "reason for stop: loading completed" updated after step S112.

The automated guided vehicle selection unit 13 of the operation management server 10 selects an automated guided vehicle 30 in which "traveling state: stopped" and "reason for stop: loading completed" are set (step S115). The movement instruction information generation unit 14 generates movement instruction information in which the destination point ID is the waypoint ID of the autorator 50 and the automated guided vehicle ID is the ID of the selected automated guided vehicle 30.

The communication unit 12 transmits the generated movement instruction information to the travel control server 20 (step S116). When the communication unit 22 of the travel control server 20 receives the movement instruction information, the travel route generation unit 24 determines a route (step S117).

The communication unit 22 transmits the route information to the automated guided vehicle 30 (step S118). When the communication unit 32 of the automated guided vehicle 30 receives the route information, the drive control unit 35 executes control to drive the wheel motor 309. The automated guided vehicle 30 moves to the autorator 50 set as the destination (step S119).

Next, the automated guided vehicle 30 performs unloading (step S120). For example, the conveyor control unit 36 executes control to drive the conveyor motor 310. Accordingly, the automated guided vehicle 30 feeds the bucket 60 and causes the autorator 50 to collect the fed bucket 60.

The communication unit 32 of the automated guided vehicle 30 transmits a signal indicating that unloading has been completed to the travel control server 20 (step S121).

Thus, the transport system 1 transports the bucket 60 placed on the bucket station 40 to the autorator 50.

Next, a description is given of the self-position estimation processing to be regularly executed.

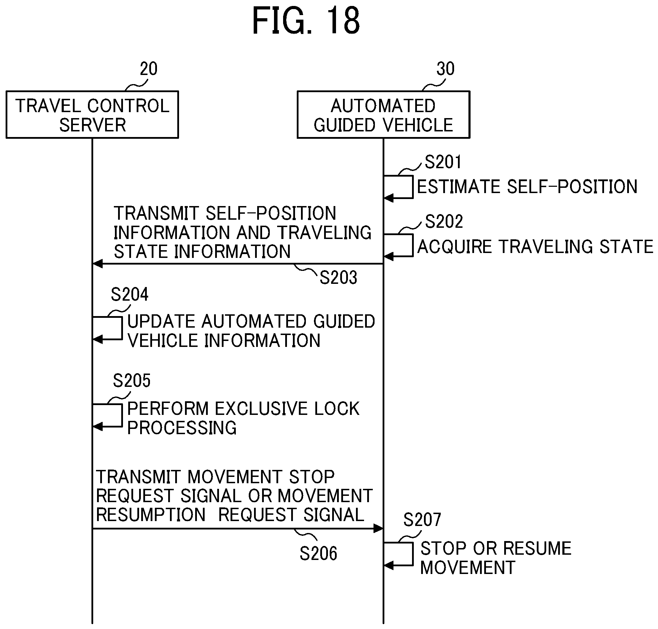

FIG. 18 is a diagram of a sequence of the self-position estimation processing according to an embodiment of the present disclosure.

The self-position estimation unit 37 of the automated guided vehicle 30 estimates the self-position (step S201). For example, the self-position estimation unit 37 calculates a value indicating a difference between the coordinates and the direction of the automated guided vehicle 30 based on the number of rotations and the direction of the wheels 301 acquired from the encoder 308. The self-position estimation unit 37 adds the calculated value indicating the difference to the value indicated by the self-position information 903 to update the self-position information 903 to a value indicating the latest self-position.

Next, the traveling state acquisition unit 38 acquires information indicating the traveling state (step S202). For example, the traveling state acquisition unit 38 determines whether the automated guided vehicle 30 is moving or stopped based on the rotation speed of the wheels 301 from the encoder 308. The traveling state acquisition unit 38 reflects the determination result in the traveling state information 902.

Next, the communication unit 32 transmits the self-position information 903 and the traveling state information 902 to the travel control server 20 (step S203). When the communication unit 22 of the travel control server 20 receives the self-position information 903 and the traveling state information 902, the travel control server 20 reflects the self-position information 903 and the traveling state information 902 to the automated guided vehicle information 904 stored in the storage unit 21 to update the automated guided vehicle information 904 (step S204).

Next, the traffic control unit 23 executes exclusive lock processing (step S205). For example, the traffic control unit 23 extracts an automated guided vehicle 30 that has approached an exclusive section to a distance equal to or greater than, e.g., a threshold Th2 based on the updated automated guided vehicle information 904. The threshold value Th2 is stored in advance as setting information in the storage unit 21.

The traffic control unit 23 determines whether the exclusive lock information 905 already includes a record indicating the extracted exclusive section that the automated guided vehicle 30 has approached. If the traffic control unit 23 determines that the record is not included, the traffic control unit 23 inserts the record into the exclusive lock information 905.

When the traffic control unit 23 determines that the record indicating the exclusive section that the extracted automated guided vehicle 30 has approached is already included, the traffic control unit 23 transmits a signal requesting movement stop to the automated guided vehicle 30 via the communication unit 22 (step S206).

In the exclusive lock processing of the step S205, the traffic control unit 23 extracts the automated guided vehicle 30 that has passed through the exclusive section, from the records included in the exclusive lock information 905. The traffic control unit 23 deletes, from the exclusive lock information 905, the record indicating the exclusive section through which the extracted automated guided vehicle 30 has passed.

The traffic control unit 23 further extracts, from the automated guided vehicle information 904, an automated guided vehicle 30 that has stopped for the reason of "waiting for exclusive section" for the exclusive section indicated in the deleted record, and transmits a signal requesting the resumption of movement to the extracted automated guided vehicle 30 in the subsequent step S206.

Subsequently, the automated guided vehicle 30 stops moving or restarts moving according to the signal received by the communication unit 32 (step S207).

The traffic control unit 23 may treat the way point IDs of consecutive exclusive sections on the map as a group of exclusive sections. For example, when both the waypoint ID "3" and the waypoint ID "4" are in exclusive sections and are continuous on the map, the traffic control unit 23 may lock or release the waypoint ID "3" and the waypoint ID "4" together.

Next, the self-position update processing executed in step S 110 of the bucket transport process illustrated in FIG. 17 is described.

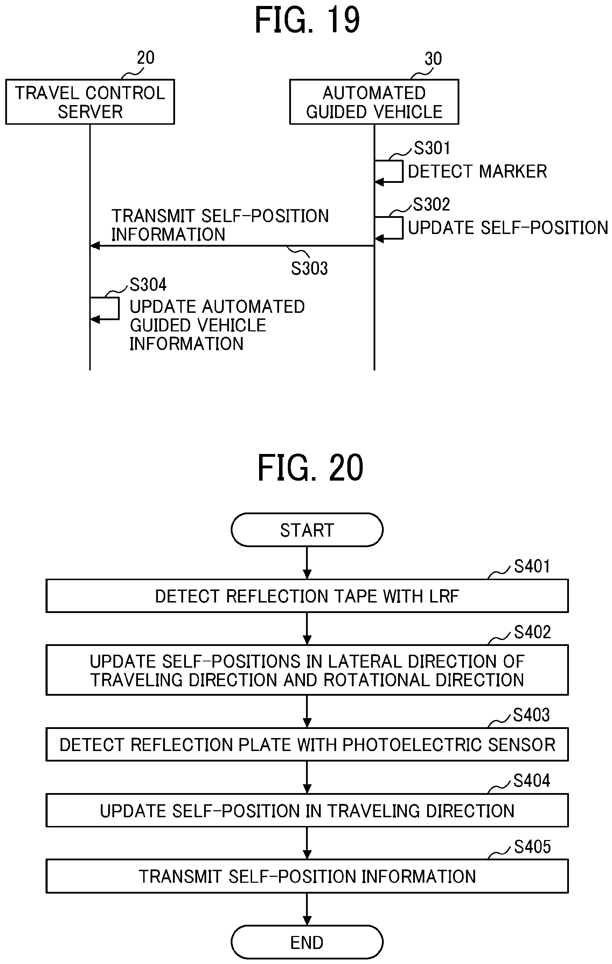

FIG. 19 is a diagram of a sequence of the self-position update processing according to an embodiment of the present disclosure.

The environment recognition unit 33 of the automated guided vehicle 30 detects the marker attached to the bucket station 40 (step S301). The self-position update unit 34 updates the self-position information 903 based on the detection result (step S302).

Subsequently, the communication unit 32 transmits the updated self-position information 903 to the travel control server 20 (step S303). When the communication unit 22 receives the self-position information 903, the travel control server 20 updates the automated guided vehicle information 904 (step S304).

Next, a description is given of processing executed by the automated guided vehicle 30 in the self-position update processing.

FIG. 20 is a flowchart of the self-position update processing according to an embodiment of the present disclosure.

In step S 110 of the bucket conveyance process illustrated in FIG. 17, the environment recognition unit 33 detects the reflection tapes 420 attached to the bucket station 40 with the LRF 303 (step S401). The self-position update unit 34 updates the self-positions in the lateral direction relative to the traveling direction and the rotational direction (step S402).

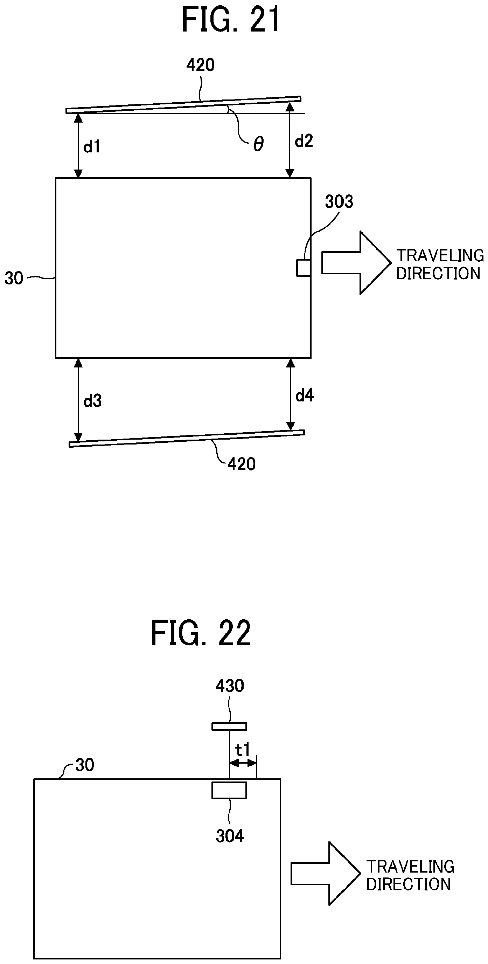

FIG. 21 is a diagram illustrating a method of updating the self-positions in the lateral direction relative to the traveling direction and the rotational direction.

The LRF 303 emits light and detects the light reflected by the reflective tapes 420. The environment recognition unit 33 determines whether the reflective tape 420 is present based on the intensity of the detected light. For example, the environment recognition unit 33 determines that the light having an intensity equal to or greater than a threshold Th3 and less than a threshold Th4 is light reflected by the reflection tape 420. The threshold Th3 and the threshold Th4 are stored in the memory 307 in advance.

The environment recognition unit 33 recognizes a consecutive point group of an object having a high reflection intensity as one reflection tape 420, and determines which of the left and right reflection tapes 420 is the object based on the shape of the reflection tapes 420 or the distance between the reflection tapes 420. The environment recognition unit 33 refers to the map information 901 and the self-position information 903, and determines that the bucket station 40 closest to the self-position is the bucket station 40 including the detected reflection tape 420.

When the bucket station 40 is determined, the environment recognition unit 33 acquires data indicating the relative positions of the reflective tape 420 and the automated guided vehicle 30 based on the distance between the reflective tape 420 and the automated guided vehicle 30. For example, the environment recognition unit 33 performs regression analysis of the point group indicating the reflection tape 420 to calculate an approximate straight line, and calculates lengths of d1, d2, d3, and d4 illustrated in FIG. 21. The environment recognition unit 33 calculates a relative angle θ between the reflection tape 420 and the traveling direction of the automated guided vehicle 30.

Next, the self-position update unit 34 updates the self-position in the lateral direction relative to the traveling direction based on the lengths of d1, d2, d3, and d4. The self-position update unit 34 updates the self-position in the rotational direction based on the angle θ.

Note that FIG. 21 illustrates an example in which the LRF 303 is installed in the front of the automated guided vehicle 30 in the traveling direction. However, for example, the LRF 303 may be installed on each of the left side and the right side. The environment recognition unit 33 may use information detected by the LRF 303 a plurality of times while the automated guided vehicle 30 moves along the traveling direction.

Referring back to FIG. 20, the environment recognition unit 33 detects the reflection plate 430 with the photoelectric sensor 304 (step S403). The self-position update unit 34 updates the self-position in the traveling direction (step S404).

FIG. 22 is a diagram illustrating a method of updating the self-position in the traveling direction.

The photoelectric sensor 304 emits light and detects the light reflected by the reflection plate 430. The environment recognition unit 33 determines whether the reflection plate 430 is present based on the intensity of the detected light. For example, the environment recognition unit 33 determines that the light having an intensity equal to or greater than the threshold Th4 is light reflected by the reflection plate 430.

Data indicating the position at which the reflection plate 430 is attached to the bucket station 40 is stored in advance in the memory 307. Accordingly, the environment recognition unit 33 calculates the position at which the reflection plate 430 is expected to be detected, from the position (coordinate values of the waypoint) of the bucket station 40 in the map information 901. The environment recognition unit 33 calculates a distance (difference) t1 in the traveling direction between the position at which the reflection plate 430 is actually detected and the detection position expected from the map information 901.

The self-position update unit 34 updates the self-position in the traveling direction based on the distance t1.

Although FIG. 22 illustrates an example in which one reflecting plate 430 is detected, the environment recognition unit 33 may use statistical values of a plurality of pieces of data obtained by detecting a plurality of reflecting plates 430 on the left side and the right side. Thus, the self-position can be updated with high accuracy.

Referring back to FIG. 20, the communication unit 32 transmits the updated self-position information to the travel control server 20 (step S405).

According to the transport system 1 of the above-described embodiment, the automated guided vehicle 30 detects the marker (index) attached to the bucket station 40 to update the self-position information 903. Accordingly, the self-position information 903 of the automated guided vehicle 30 is corrected in accordance with the position of the bucket station 40. Therefore, even if the position of the bucket station 40 does not exactly match the map information 901, the accuracy of the relative position with respect to the bucket station 40 increases, thus allowing the bucket 60 to be more accurately collected.

Accordingly, the bucket station 40 may not be fixed to, for example, a floor, a wall, or the like. The bucket station 40 may usually be placed at another place. In such a case, the bucket station 40 may be installed at a position corresponding to the map information 901 only when the bucket station 40 is used. Further, the map information 901 of each device may be updated, thus allowing the layout to be easily changed.

In the above-described embodiments, the example in which the marker (index) is detected by the LRF or the photoelectric sensor has been described. However, the marker (index) may be detected by another method. For example, the environment recognition unit 33 may analyze an image captured by a camera and calculate the relative position with respect to the bucket station 40.

Although the example in which the bucket 60 is transported to one destination has been described, the bucket 60 may be selected from a plurality of destinations. In such a case, a bar code or the like in which information indicating the transport destination is embedded may be attached to the bucket 60, and the bucket station 40 may read the attached bar code to acquire the information indicating the transport destination and transmit the information to the operation management server 10.

In the above-described embodiments, the example in which the encoder 308 acquires data indicating the rotation speed and the angle of the wheel 301 to estimate the self-position has been described. However, the self-position may be estimated by another method. For example, an image captured by a camera may be analyzed, or a wall, a pillar, or the like may be detected by an ultrasonic sensor.

The devices described in the above-described embodiments are merely illustrative of one of a plurality of computing environments in which embodiments of the present disclosure are implemented.

In some embodiments, the operation management server 10 includes multiple computing devices such as server clusters. The computing devices are configured to communicate with each other via any type of communication link, including a network, shared memory, etc., and perform the processes disclosed in the above-described embodiment. Similarly, the travel control server 20 may include a plurality of computing devices configured to communicate with one another.

Furthermore, the operation management server 10 and the travel control server 20 can be configured to share the disclosed processing steps, such as the processing of FIG. 17, in various combinations. For example, the process executed by the automated guided vehicle selection unit 13 of the operation management server 10 may be executed by the travel control server 20. Similarly, the function of the traffic control unit 23 of the travel control server 20 can be executed by the operation management server 10. The elements of the operation management server 10 and the travel control server 20 may be integrated into one server device or may be divided into a plurality of devices. The operation management server 10 and the travel control server 20 are examples of an information processing apparatus.

Each function of the embodiments described above can be implemented by one processing circuit or a plurality of processing circuits. Here, the "processing circuit or circuitry" in the present specification includes a programmed processor to execute each function by software, such as a processor implemented by an electronic circuit, and devices, such as an application specific integrated circuit (ASIC), a digital signal processors (DSP), a field programmable gate array (FPGA), and conventional circuit components arranged to perform the recited functions.

## Claims

1. A transport system (1), comprising:
a load table (40) with an index (420, 430); and
a plurality of traveling bodies configured to transport an object placed on the load table,
each traveling body (30) including:
a storage unit (31) configured to store map information (901) including a position of the load table (40), traveling state information (902) and self-position information (903) indicating a position of the traveling body,
an environment recognition unit (33) configured to detect the index and acquire data indicating a relative position between the index and the traveling body,
a self-position update unit (34) configured to update the self-position information (903) based on the relative position and the map information (901), and
a traveling state acquisition unit (38) configured to acquire traveling state information (902) indicating a traveling state of the traveling body (30);
wherein the transport system (1) further comprises an information processing apparatus (10, 20);
**characterised in that**
the load table (40) includes:
a sensor (414) configured to detect the object when the object is placed on the load table (40), and
a communication device (411) configured to transmit a signal indicating that the object has been detected to the information processing apparatus when the sensor (414) detects the object;
wherein the information processing apparatus (10, 20) is configured to:
receive the signal indicating that the object has been detected, select, from the plurality of traveling bodies, the traveling body (30) to transport the object based on the self-position information (903) and the traveling state information (902);
generate route information indicating a route along which the selected traveling body (30) travels, based on the map information; and
transmit the route information to the selected traveling body,
wherein each traveling body (30) further includes:
a communication unit (32) configured to receive the route information; and a drive control unit (35) configured to travel the traveling body based on the route information.

2. The transport system according to claim 1,
wherein the index (420, 430) is made of a material that reflects light, and
wherein the environment recognition unit (33) is configured to emit light, detect light reflected from the index, and measure a distance between the index and the environment recognition unit.

3. A method of transporting, with a plurality of traveling bodies configured to transport an object placed on a load table (40), the method comprising:
acquiring, by a traveling state acquisition unit (38), traveling state information (902) indicating a traveling state of the traveling body (30);
storing, in each traveling body (30), map information (901) including a position of the load table (40), traveling state information (902) and self-position information (903) indicating a position of the traveling body (30);
**characterized by**
detecting, with a sensor (414) included in the load table (40), the object when the object is placed on the load table (40);
transmitting, with a communication device (411) included in the load table (40), a signal indicating that the object has been detected to the information processing apparatus (10, 20) when the sensor (414) detects the object;
receiving, by an information processing apparatus (10, 20), the signal indicating that the object has been detected;
selecting, by the information processing apparatus (10, 20), the traveling body (30) to transport the object from the plurality of traveling bodies based on the self-position information (903) and the traveling state information (902);
detecting, with the selected traveling body (30), an index (420, 430) on the load table (40);
acquiring, with the selected traveling body (30), data indicating a relative position between the index and the traveling body (30); and
updating the self-position information (903) stored in the selected traveling body (30), based on the relative position and the map information (901);
generating, in the information processing apparatus (10, 20), route information indicating a route along which the selected traveling body (30) travels, based on the map information; and
transmitting, with the information processing apparatus (10, 20), the route information to the selected traveling body (30),
receiving, by a communication unit (32) included in the selected traveling body (30), the route information;
traveling, with a drive control unit (35) included in the selected traveling body (30), the selected traveling body (30) based on the route information.

## Patentansprüche

1. Transportsystem (1), das Folgendes umfasst:
einen Lasttisch (40) mit einem Index (420, 430); und
eine Vielzahl von Fahrkörpern, die dafür konfiguriert sind, ein auf dem Lasttisch platziertes Objekt zu transportieren,
wobei jeder Fahrkörper (30) Folgendes enthält:
eine Speichereinheit (31), die dafür konfiguriert ist, Karteninformationen (901), die eine Position des Lasttisches (40) enthalten, Fahrzustandsinformationen (902) und Selbstpositionsinformationen (903), die eine Position des Fahrkörpers anzeigen, zu speichern,
eine Umgebungserfassungseinheit (33), die dafür konfiguriert ist, den Index zu erfassen und Daten zu erfassen, die eine relative Position zwischen dem Index und dem Fahrkörper angeben,
eine Selbstpositions-Aktualisierungseinheit (34), die dafür konfiguriert ist, die Selbstpositionsinformationen (903) basierend auf der relativen Position und den Karteninformationen (901) zu aktualisieren, und
eine Fahrzustandserfassungseinheit (38), die dafür konfiguriert ist, Fahrzustandsinformationen (902) zu erfassen, die einen Fahrzustand des Fahrkörpers (30) anzeigen;
wobei das Transportsystem (1) ferner eine informationsverarbeitende Vorrichtung (10, 20) umfasst;
**dadurch gekennzeichnet, dass**:
der Lasttisch (40) Folgendes enthält:
einen Sensor (414), der dafür konfiguriert ist, das Objekt zu erfassen, wenn das Objekt auf dem Lasttisch (40) platziert wird, und
eine Kommunikationsvorrichtung (411), die dafür konfiguriert ist, ein Signal, das anzeigt, dass das Objekt erfasst wurde, an die informationsverarbeitende Vorrichtung zu übertragen, wenn der Sensor (414) das Objekt erkennt;
wobei die informationsverarbeitende Vorrichtung (10, 20) für Folgendes konfiguriert ist:
Empfangen des Signals, das anzeigt, dass das Objekt erfasst worden ist, Auswählen, aus der Vielzahl von Fahrkörpern, des Fahrkörpers (30), um das Objekt basierend auf den Selbstpositionsinformationen (903) und den Fahrzustandsinformationen (902) zu transportieren;
Erzeugen von Routeninformationen, die eine Route angeben, entlang der sich der ausgewählte Fahrkörper (30) bewegt, basierend auf den Karteninformationen; und
Übertragen der Routeninformationen an den ausgewählten Fahrkörper, wobei jeder Fahrkörper (30) ferner Folgendes enthält:
eine Kommunikationseinheit (32), die dafür konfiguriert ist, die Routeninformationen zu empfangen; und
eine Antriebssteuereinheit (35), die dafür konfiguriert ist, den Fahrkörper basierend auf den Routeninformationen zu bewegen.

2. Transportsystem nach Anspruch 1,
wobei der Index (420, 430) aus einem Material hergestellt ist, das Licht reflektiert, und
wobei die Umgebungserfassungseinheit (33) dafür konfiguriert ist, Licht zu emittieren, vom Index reflektiertes Licht zu erfassen und einen Abstand zwischen dem Index und der Umgebungserfassungseinheit zu messen.

3. Verfahren zum Transportieren mit einer Vielzahl von Fahrkörpern, die dafür konfiguriert sind, ein auf einem Lasttisch (40) platziertes Objekt zu transportieren, wobei das Verfahren Folgendes umfasst:
Erfassen, durch eine Bewegungszustandserfassungseinheit (38), von Bewegungszustandsinformationen (902), die einen Bewegungszustand des Fahrkörpers (30) anzeigen;
Speichern, in jedem Fahrkörper (30), von Karteninformationen (901), die eine Position des Lasttisches (40), Fahrzustandsinformationen (902) und Selbstpositionsinformationen (903) enthalten, die eine Position des Fahrkörpers (30) angeben,
**gekennzeichnet durch**
Erfassen, mit einem Sensor (414), der in dem Lasttisch (40) enthalten ist, des Objekts, wenn das Objekt auf dem Lasttisch (40) platziert wird;
Übertragen, mit einer Kommunikationsvorrichtung (411), die in dem Lasttisch (40) enthalten ist, eines Signals, das anzeigt, dass das Objekt erfasst wurde, an die informationsverarbeitende Vorrichtung (10, 20), wenn der Sensor (414) das Objekt erkennt;
Empfangen, durch eine informationsverarbeitende Vorrichtung (10, 20), des Signals, das anzeigt, dass das Objekt erfasst worden ist;
Auswählen, durch die informationsverarbeitende Vorrichtung (10, 20), des Fahrkörpers (30) zum Transportieren des Objekts aus der Vielzahl von Fahrkörpern basierend auf den Selbstpositionsinformationen (903) und den Bewegungszustandsinformationen (902);
Erfassen, mit dem ausgewählten Fahrkörper (30), eines Indexes (420, 430) auf dem Lasttisch (40);
Erfassen, mit dem ausgewählten Fahrkörper (30), von Daten, die eine relative Position zwischen dem Index und dem Fahrkörper (30) angeben; und
Aktualisieren der in dem ausgewählten Fahrkörper (30) gespeicherten Selbstpositionsinformationen (903) basierend auf der relativen Position und den Karteninformationen (901);
Erzeugen, in der informationsverarbeitenden Vorrichtung (10, 20), von Routeninformationen, die eine Route angeben, entlang der sich der ausgewählte Fahrkörper (30) bewegt, basierend auf den Karteninformationen; und
Übertragen, mit der informationsverarbeitenden Vorrichtung (10, 20), der Routeninformationen an den ausgewählten Fahrkörper (30),
Empfangen, durch eine Kommunikationseinheit (32), die in dem ausgewählten Fahrkörper (30) enthalten ist, der Routeninformationen;
Bewegen, mit einer Antriebssteuereinheit (35), die in dem ausgewählten Fahrkörper (30) enthalten ist, des ausgewählten Fahrkörpers (30) basierend auf den Routeninformationen.

## Revendications

1. Système de transport (1), comprenant :
une table de chargement (40) avec un index (420, 430) ; et
une pluralité de corps mobiles configurés pour transporter un objet placé sur la table de chargement,
chaque corps mobile (30) comprenant :
une unité de stockage (31) configurée pour stocker des informations cartographiques (901) comprenant une position de la table de chargement (40), des informations d'état de déplacement (902) et des informations de position propre (903) indiquant une position du corps mobile,
une unité de reconnaissance d'environnement (33) configurée pour détecter l'index et acquérir des données indiquant une position relative entre l'index et le corps mobile,
une unité de mise à jour de position propre (34) configurée pour mettre à jour les informations de position propre (903) sur la base de la position relative et des informations cartographiques (901), et
une unité d'acquisition d'état de déplacement (38) configurée pour acquérir des informations d'état de déplacement (902) indiquant un état de déplacement du corps mobile (30) ;
dans lequel le système de transport (1) comprend en outre un appareil de traitement d'informations (10, 20) ;
**caractérisé en ce que**
la table de chargement (40) comprend :
un capteur (414) configuré pour détecter l'objet lorsque l'objet est placé sur la table de chargement (40), et
un dispositif de communication (411) configuré pour transmettre un signal indiquant que l'objet a été détecté par l'appareil de traitement d'informations lorsque le capteur (414) détecte l'objet ;
dans lequel l'appareil de traitement d'informations (10, 20) est configuré pour :
recevoir le signal indiquant que l'objet a été détecté,
sélectionner, parmi la pluralité de corps mobiles, le corps mobile (30) pour transporter l'objet sur la base des informations de position propre (903) et des informations d'état de déplacement (902) ;
générer des informations d'itinéraire indiquant un itinéraire le long duquel le corps mobile (30) sélectionné se déplace, sur la base des informations cartographiques ; et
transmettre les informations d'itinéraire au corps mobile sélectionné, dans lequel chaque corps mobile (30) comprend en outre :
une unité de communication (32) configurée pour recevoir les informations d'itinéraire ; et
une unité de commande d'entraînement (35) configurée pour déplacer le corps mobile sur la base des informations d'itinéraire.

2. Système de transport selon la revendication 1,
dans lequel l'index (420, 430) est fait d'un matériau qui réfléchit la lumière, et
dans lequel l'unité de reconnaissance d'environnement (33) est configurée pour émettre la lumière, détecter la lumière réfléchie par l'index, et mesurer une distance entre l'index et l'unité de reconnaissance d'environnement.

3. Procédé de transport, avec une pluralité de corps mobiles configurés pour transporter un objet placé sur une table de chargement (40), le procédé comprenant :
l'acquisition, par une unité d'acquisition d'état de déplacement (38), d'informations d'état de déplacement (902) indiquant un état de déplacement du corps mobile (30) ;
le stockage, dans chaque corps mobile (30), d'informations cartographiques (901) comprenant une position de la table de chargement (40), d'informations d'état de déplacement (902) et d'informations de position propre (903) indiquant une position du corps mobile (30) ;
**caractérisé par** la détection, avec un capteur (414) inclus dans la table de chargement (40), de l'objet lorsque l'objet est placé sur la table de chargement (40) ;
la transmission, avec un dispositif de communication (411) inclus dans la table de chargement (40), d'un signal indiquant que l'objet a été détecté à l'appareil de traitement d'informations (10, 20) lorsque le capteur (414) détecte l'objet ;
la réception, par un appareil de traitement d'informations (10, 20), du signal indiquant que l'objet a été détecté ;
la sélection, par l'appareil de traitement d'informations (10, 20), du corps mobile (30) pour transporter l'objet parmi la pluralité de corps mobiles sur la base des informations de position propre (903) et des informations d'état de déplacement (902) ;
la détection, avec le corps mobile sélectionné (30), d'un index (420, 430) sur la table de chargement (40) ;
l'acquisition, avec le corps mobile sélectionné (30), de données indiquant une position relative entre l'index et le corps mobile (30) ; et
la mise à jour des informations de position propre (903) stockées dans le corps mobile sélectionné (30), sur la base de la position relative et des informations cartographiques (901) ;
la génération, dans l'appareil de traitement d'informations (10, 20), d'informations d'itinéraire indiquant un itinéraire le long duquel le corps mobile (30) sélectionné se déplace, sur la base des informations cartographiques ; et
la transmission, avec l'appareil de traitement d'informations (10, 20), des informations d'itinéraire au corps mobile sélectionné (30),
la réception, par une unité de communication (32) incluse dans le corps mobile (30) sélectionné, des informations d'itinéraire ;
le déplacement, avec une unité de commande d'entraînement (35) incluse dans le corps mobile (30) sélectionné, du corps mobile (30) sélectionné sur la base des informations d'itinéraire.
